# EUROPÄISCHE PATENTSCHRIFT

(11) **EP 2 617 692 B1**
(45) Veröffentlichungstag und Bekanntmachung des Hinweises auf die Patenterteilung: **21.03.2018**
(21) Anmeldenummer: 12003718.9
(22) Anmeldetag: 10.05.2012
(51) Int. Cl.: C04B 7/345, C04B 7/32

(54) **Verfahren und Additiv zur Steigerung der Frühfestigkeit und Verwendung des Additifs**
Method and additive for increasing early strength and use of the additive
Procédé et additif destinés à l'augmentation de la résistance initiale et l'utilisation d'additif

(30) Priorität: 18.08.2011 EP 11006757; 26.10.2011 EP 11008570; 05.03.2012 EP 12001488; 26.03.2012 EP 12002111; 30.03.2012 EP 12002342
(43) Veröffentlichungstag der Anmeldung: 24.07.2013
(73) Patentinhaber: HeidelbergCement AG, 69120 Heidelberg (DE)
(72) Erfinder: Bullerjahn, Frank, 69181 Leimen (DE); Schmitt, Dirk, 69181 Leimen (DE); Ben Haha, Mohsen, 69117 Heidelberg (DE)
(74) Vertreter: Zellentin & Partner mbB Patentanwälte

(56) Entgegenhaltungen:
- EP-A1- 0 397 963
- EP-A1- 0 858 981
- EP-A1- 2 159 202
- WO-A1-98/18740
- DE-A1- 2 122 710
- DE-B3-102005 054 190
- DE-T2- 60 029 770
- SHERMAN N ET AL: "Long-term behaviour of hydraulic binders based on calcium sulfoaluminate and calcium sulfosilicate", CEMENT AND CONCRETE RESEARCH, PERGAMON PRESS, ELMSFORD, NY, US, Bd. 25, Nr. 1, 1. Januar 1995 (1995-01-01) , Seiten 113-126, XP002665884, ISSN: 0008-8846

## Beschreibung

Die vorliegende Erfindung betrifft ein Verfahren zur Steigerung der Frühfestigkeit, bei dem Ternesit in Kombination mit einer nicht hydraulisch reaktiven Aluminiumkomponente die Erhärtung von hydraulischen und/oder latent-hydraulischen Bindemitteln beschleunigt, sowie ein frühfestigkeitsteigerndes Additiv enthaltend Ternesit und eine nicht hydraulisch reaktive Aluminiumkomponente.

Zement bzw. hydraulische Bindemittel sind weit verbreitete Baustoffe. Ein wichtiges Kriterium ist die Frühfestigkeit. Die Zeit, innerhalb derer die hydraulische Reaktion so weit fortgeschritten ist, dass sich eine merkliche bzw. messbare Festigkeit entwickelt, hängt vom Zement selber, etwaigen Zusätzen und den Umgebungsbedingungen ab. Es gibt Zemente, die von sich aus sehr schnell erhärten (z.B. Calciumsulfoaluminatzement) und solche, die eine geringe Frühfestigkeit haben (z.B. Hochofenzemente). Zusätze wie einerseits Erhärtungsbeschleuniger und andererseits Verzögerer bzw. Fließmittel erlauben eine Einstellung der Frühfestigkeit und des Erhärtungsbeginns in recht weiten Grenzen. Jedoch sind Zusätze nicht immer unproblematisch. Auch die Umgebungsbedingungen, insbesondere die Temperatur, spielen eine Rolle. Je wärmer es ist, desto schneller verläuft in der Regel für ein gegebenes Bindemittelsystem die Erhärtung.

Trotz vieler nützlicher Vorschläge bleibt die Steuerung der Frühfestigkeit eine Aufgabe, weitere Möglichkeiten werden ständig gesucht.

### Stand der Technik

EP 1 171 398 B1 (DE 600 29 779 T2) beschreibt die Sinterung spezifischer / ausgewählter, fast ausschließlich natürlicher Rohmaterialien, sowie mindestens einer Quelle für CaF₂, bei 900 bis 1200 °C, um im Ofen Spezialklinker zu produzieren, die hohe Konzentrationen an Kristall X = {(C, K, N, M)₄(A, F, Mn, P, T, S)₃(Cl, $)} und Kristall Y = {(C₂S)₃(C$)₃Ca(f, Cl)₂} [Mineral aus der Gruppe der Ellestadite] und/oder Kristall Z = {C₅S₂$} aufweisen. Diese Klinker werden mit hydraulischem Zement oder Zement vom Typ Portland gemischt, um fertige Zementzusammensetzungen zu produzieren, wobei der Gehalt an Kristall X zwischen 15 bis 75 Gew.-% des speziellen Klinkers und mindestens 5 Gew.-% der finalen Bindemittelmischung ausmacht. In EP 2 159 202 A2 wird ein Bindemittel beschrieben, dem als Additiv eine reaktive Aluminiumverbindung zugefügt ist, welche die Reaktion von zugesetztem Wasser mit Silikaten zu einem silikatreichen Hydrogel verlangsamt, vermindert, inhibiert und/oder Silikathydrogel bindet. Die Frühfestigkeit von Bindemitteln soll gesteigert werden, indem anstelle von silikatreichen Hydrogelen Alumosilikate gebildet werden. Damit soll eine Diffusionsbarriere durch silikatreiche Hydrogele vermieden und anstelle dieser sehr plastischen Produkte sollen die Festigkeit fördernde Produkte gebildet werden.

Es hat sich nun überraschenderweise herausgestellt, dass eine signifikante bis hin zur gesamten Menge der Phase C₅S₂$, im Folgenden als Ternesit bezeichnet, bei Kombination mit einer Aluminiumkomponente schon innerhalb der ersten Stunden bis Tage der Hydratation, in Abhängigkeit von der Form und Menge an verfügbarem Aluminium und etwaigen vorhandenen Sulfatträgern, reagiert und die Phasenzusammensetzung der hydratisierten Proben signifikant beeinflusst.

Die vorliegende Erfindung löst daher die obige Aufgabe durch ein Verfahren zur Steuerung der Frühfestigkeit von hydraulischen und latent hydraulischen Bindemitteln, bei dem zur Erhöhung der Frühfestigkeit einem Bindemittel ein Gemisch von Ternesit und einer nicht hydraulisch reaktiven Aluminiumkomponente zugesetzt wird. Die Aufgabe wird außerdem durch ein frühfestigkeitsteigerndes Additiv enthaltend Ternesit und eine nicht hydraulisch reaktive Aluminiumkomponente gelöst.

Unter Aluminiumkomponente werden Stoffe mit einer hohen Löslichkeit und/oder hohen Reaktivität, wie zum Beispiel lösliche Alkali-/Erdalkalialuminate und Aluminiumsalze (z.B. Na₂Al₂O₄, K₂Al₂O₄, Aluminiumnitrat, -acetat, -chlorid, - formiat, -sulfat, etc.), reaktives und/oder amorphes Aluminiumhydroxid, Aluminiumoxidhydroxide, künstliche und natürliche Puzzolane (z.B. Metakaolin) oder Kombination davon, verstanden. Die Alumniumkomponente zeigt jedoch für sich allein kein hydraulisches oder latent-hydraulisches Verhalten.

Die Aluminiumkomponente kann mit dem Ternesit gemeinsam vermahlen werden oder als wässrige Lösung/Suspension und/oder als, zum Beispiel mit diversen Säuren und/oder mit Polymeren, stabilisierte wässrige Lösung/Suspension, welche als zusätzliche Komponente kolloidales, nanoskaliges Siliziumoxid / Silica enthalten kann, zugesetzt werden. Die Aluminiumkomponente kann ebenfalls dem Anmachwasser, zum Beispiel während der Herstellung eines Betons oder kurz vor der Anwendung des Bindemittels, zugesetzt werden.

Es werden folgende in der Zementindustrie üblichen Abkürzungen verwendet: H - H₂O, C - CaO, A - Al₂O₃, F - Fe₂O₃, M- MgO, S - SiO₂ und $-SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

Phasen, wie zum Beispiel C₅S₂$, werden vorrangig stöchiometrisch angegeben, jedoch kann die genaue Zusammensetzung abweichen/variieren. Des Weiteren können verschiedene Fremdionen aus der Gruppe der Halogene, Nichtmetalle, Alkali- und Erdalkalimetalle, sowie Vertreter der Übergangs- und Halbmetalle und Metalle in die Kristallstruktur der Phase eingebaut werden. Für den erfindungsgemäßen Klinker sind diese alle geeignet. Vorzugsweise wird zum Beispiel Phosphat, Fluorid, Bor, Nitrat oder Chlorid aber auch Natrium und Kalium in die Struktur von C₅S₂$ eingebaut, wodurch diese stabilisiert wird (z.B. bei höheren Temperaturen > 1200 °C) und/oder schneller gebildet wird, wobei solche Stoffe im Folgenden als Mineralisatoren zusammengefasst werden.

Mit Mineralisatoren sind Stoffe gemeint, welche als Flussmittel wirken und/oder die Temperatur senken, die zur Bildung einer Schmelze notwendig ist, und/oder solche, die die Bildung der Klinkerverbindung fördern, wie zum Beispiel durch Mischkristallbildung und/oder Phasenstabilisierung.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet. Bindemittel oder Bindemittelmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt.

Ein Klinker kann bereits alle notwendigen bzw. gewünschten Phasen enthalten und nach Vermahlen zu Zement direkt als Bindemittel zum Einsatz kommen. Häufig wird die Zusammensetzung des Bindemittels durch Vermischen von zwei oder mehreren Klinkern und/oder Zementen erhalten, wobei das Vermischen bereits vor (oder während) dem Mahlen und/oder im gemahlenen Zustand und/oder bei der Herstellung des Bindemittels erfolgt. Auch ein Zusatz von Additiven und Zusatzstoffen zum Zement und/oder Bindemittel ist üblich. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Soweit nichts anderes angegeben ist, ist mit "reaktiv" eine hydraulische Reaktivität gemeint. Unter reaktiven Aluminium-Verbindungen werden insbesondere Stoffe verstanden, die ihr Aluminium nach der Zugabe von Wasser zur Reaktion bereitstellen. Bevorzugt sind lösliche Alkali-/Erdalkalialuminate, Aluminiumsalze(z.B. Na₂Al₂O₄, K₂Al₂O₄, Aluminiumnitrat, -acetat, -chlorid, -formiat, -sulfat, etc.), amorphe und/oder reaktive Aluminiumhydroxide.

Bisher wurde Ternesit (auch als Sulfospurrit, Sulfatspurrit oder Calciumsulfosilikat bezeichnet) als unreaktiv, inert bzw. wenig reaktiv und unerwünscht beschrieben (siehe z.B. "Synthesis of Calcium Sulfoaluminate Cements From Al2O3-Rich By-products from Aluminium Manufacture", Milena Marroccoli et al., The second international conference on sustainable construction materials and technologies 2010, "Synthesis of Special Cements from Mixtures Containing Fluidized Bed Combustion Waste, Calcium Carbonate and Various Sources of Alumina", Belz et al, 28th Meeting of the Italian Section of The Combustion Institute 2005, "Fluidized Bed Combustion Waste as a Raw Mix Component for the Manufacture of Calcium Sulphoaluminate Cements", Belz G et al, 29th Meeting of the Italian Section of The Combustion Institute, 2006, Shermann et al, "Long-Term Behaviour of Hydraulic Binders based on Claciumsulfoaluminate and Calciumsulfosilicate", Cement and Concrete Research, Bd. 1, S. 113-126 (1995) und "The Fabrication of Value Added Cement Products from Circulating Fluidized Bed Combustion Ash", Jewell R.B et al, World of Coal Ash (WOCA) Covington, Kentucky, USA, 2007). Des Weiteren werden regelmäßig Methoden aufgezeigt diese "unerwünschte Phase" zu vermeiden.

Durch die erfindungsgemäße Kombination mit einer Aluminiumkomponente erfolgt jedoch eine Umsetzung zu sehr frühen Zeiten. Die Aluminiumkomponente muss ausreichende Mengen Aluminium in die wässrige Phase, in welcher die hydraulische Reaktion stattfindet, abgeben. Daher eignen sich entweder gut wasserlösliche Aluminiumverbindungen oder solche, bei denen eine zwar geringe Konzentration erreichbar ist aber diese sehr rasch in Lösung geht. Es kommt also nicht darauf an, eine hohe Konzentration Aluminium bereitzustellen, sondern darauf, dass eine ausreichende Konzentration, die auch gering sein kann, dauernd bereit steht. Dies lässt sich sowohl durch gut lösliche Verbindungen erreichen wie auch durch solche, die eine nur geringe Löslichkeit haben, wobei aber der Lösungsvorgang sehr rasch verläuft, so dass Aluminium in dem Maße, wie es umgesetzt wird, nachgeliefert wird.

C₅S₂$ oder ternesitreicher Klinker kann durch Sinterung von Rohstoffen, welche ausreichende Mengen CaO, SiO₂ und SO₃ bereitstellen, hergestellt werden. Dabei eignen sich einerseits reine bzw. im Wesentlichen reine Rohstoffe wie Calciumcarbonat oder -oxid, Quarzmehl oder Microsilica, und Calciumsulfat. Andererseits kann eine Vielzahl natürlicher aber auch industrieller Materialien, wie zum Beispiel, aber nicht ausschließlich, Kalkstein, Dolomit, Bauxit, Ton / Tonstein, kalzinierter Ton (z.B. Metakaolin), Basalt, Periodit, Dunit, Ignimbrit, Karbonatit, Asche / Schlacke / Hüttensand hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Die Rohstoffe können, müssen aber nicht, vorbehandelt werden.

Ternesit oder ternesitreicher Klinker kann in einem Schritt großtechnisch durch die Sinterung der homogenisierten, feinteiligen Rohstoffe in einem Drehrohrofen bei mindestens 900 °C, typischerweise im Bereich von 1000 °C bis 1300 °C, insbesondere von 1050 °C bis 1200 °C und noch stärker bevorzugt von 1100 °C bis 1150 °C, erhalten werden. Typischerweise wird in einem Zeitraum von 10 bis 240 min, vorzugsweise von 30 min bis 90 min eine ausreichende Menge Ternesit gebildet.

Der so erzeugte Klinker ist sehr porös und leicht mahlbar und die Reaktivität des Klinkers kann z.B. durch die Erhöhung der Feinheit und/oder der Gehalte an α C₂S gezielt, entsprechend der jeweiligen Anforderung des Bindemittels, eingestellt bzw. optimiert werden. Dies kann ebenfalls durch die Zugabe von Mineralisatoren zum Rohmehl erreicht werden, wobei ein Teil, bis hin zum überwiegenden Teil, des Dicalciumsilikates als α Polymorph von C₂S und/oder in Form von Mischkristallen beziehungsweise von dotiertem "a" C₂S, wie zum Beispiel in Gegenwart von P₂O₅ als Calcium-Phosphat-Silikat [Ca₂SiO₄ • 0.05Ca₃(PO₄)₂], vorliegt. Die Bildung mindestens einer Schmelzphase (z.B. eine calciumsilikatische Schmelzphase im System CaO - SiO₂ - CaSO₄ - ±Mineralisator aber auch im System CaO - Al₂O₃(Fe₂O₃) - SiO₂ - CaSO₄ - ±Mineralisator), wird begünstigt bzw. hervorgerufen.

Es ergibt sich der weitere Vorteil, dass der Klinker gezielt erhöhte Magnesium / Periklasgehalte (> 2 Gew.-%) aufweisen kann, wenn geringere Brenntemperaturen (<1100 °C) eingestellt wurden. Periklas kann in einer reaktiven Form vorliegen und zur Festigkeitsentwicklung / Hydratation beitragen.

Überraschenderweise hat sich des Weiteren gezeigt, dass die Aufheizrate sowie der Einsatz von Mineralisatoren (z.B. Ca₃P₂O₈, CaF₂, Na₂CO₃, K₂CO₃, FeCl₃, MgCl₂) einen signifikanten Einfluss auf die Zusammensetzung des Klinkers und die Menge und Anteile der reaktiven Phasen ausüben. Eine hohe Aufheizrate (Ofen auf die gewünschte Zieltemperatur eingestellt, d.h. das Rohmehl wurde direkt bei der entsprechenden Temperatur gesintert) stabilisiert C₅S₂$ auch noch bei höheren Temperaturen und ebenso der Einsatz von Mineralisatoren. Bei geringeren Aufheizraten bilden sich neben Ternesit vermehrt Polymorphe von α C₂S sowie Mischkristallen von α C₂S und dem Mineralisator.

Die Bildung einer Schmelzphase kann gezielt durch die Wahl der Aufheizrate, maximalen Brenntemperatur, der Abkühlungsrate und/oder die Zugabe von Mineralisatoren gesteuert werden.

Zur Herstellung von Ternesit hat sich auch ein zweistufiges Verfahren als vorteilhaft erwiesen, wenn zum Beispiel Rohstoffe mit einem hohen Anteil kristalliner Hochtemperaturphasen eingesetzt werden. Hierbei erfolgt das Sintern bzw. Brennen der Rohmehlmischung in einem ersten Schritt bei über 1200 °C bis 1350 °C, vorzugsweise bei 1250 °C bis 1300 °C, wobei etwaige unerwünschte kristalline Hochtemperaturphasen (z.B. C₂AS, C₂F, etc.) zerstört/umgesetzt und Phasen mit positiven / gewünschten Eigenschaften (z.B. C₄(AₓFe₁₋ₓ)₃$ mit x von 0,1 bis 1, vorzugsweise von 0,8 bis 0,95) gebildet werden. Typischerweise beträgt der Zeitraum der Sinterung bei > 1200 °C 10 min bis 240 min, vorzugsweise 30 min bis 90 min.

Jedoch geht mit der Sinterung bei > 1200 °C ein wesentlicher Nachteil einher. Die gewünschte Phase C₅S₂$ ist typischerweise, wenn keine Mineralisatoren in ausreichender Menge vohanden sind, um die Phase hin zu höhren Temperaturen zu stabilisieren bzw. die Aufheizrate nicht hoch genug ist, ab einer Temperatur von über ±1180 °C nicht stabil ("Ternesite, Ca5(SiO4)2SO4, a new mineral from Ettringer Bellerberg/Eifel Germany" Irran et al. 1997, Mineralogy and Petrology Vol 60, "Phase compatibility in the system CaO-SiO2-Al2O3-Fe2O3-SO3 referred to sulphoaluminate belite cement clinker" Sahu & Majling 1993, CCR Vol. 23, "Phase changes in the system CaO-Al2O3-SiO2-Fe2O3-MgO-CaSO4-K2SO4 in air up to 1300 °C referred to sulphoaluminate cement clinker" Kapralik & Hanic 1986, Br. Ceram. Trans. J. Vol. 85) und zerfällt in C₂S und C$. Erfindungsgemäß wird daher die Sinterung bei über 1200 °C mit einer gezielten, gegenüber der üblichen Zeit verlangsamten Kühlung des Klinkers über einen Bereich von 1200 °C bis 750 °C kombiniert, um C₅S₂$ gezielt zu bilden.

Daher wird das im ersten Schritt erhaltene Klinkerzwischenprodukt gezielt im Ofenraum und/oder im Kühlersystem getempert, wobei es den Temperaturbereich von 1200 °C bis 750 °C, vorzugsweise von 1150 bis 850 °C, und insbesondere von 1180 °C bis 1050 °C, für eine Zeit durchläuft, die ausreicht um die gewünschte Menge C₅S₂$ zu bilden. Gleichzeitig wird eine gewisse Menge an Aluminat- und Ferratphasen und Reste der kristallinen Hochtemperaturphasen der Rohstoffe mit vorhandenem C$ zu zusätzlichem C₄(Aₓ(F₍₁₋ₓ₎)₃$ und C₅S₂$ umgesetzt. Das Klinkerzwischenprodukt sollte den Temperaturbereich zwischen 1200 °C und 1050 °C für einen Zeitraum von 10 min bis 180 min, vorzugsweise von 25 min bis 120 min und noch stärker bevorzugt von 20 min bis 90 min durchlaufen. Der Klinker kann während der Abkühlung den Bereich von 1050 °C bis 750 °C, vorzugsweise von 1050 °C bis 850 °C für einen Zeitraum von 5 min bis 120 min, vorzugsweise von 10 min bis 60 min durchlaufen.

Abschließend wird der Klinker in an sich bekannter Weise rapide abgekühlt, so dass weitere Phasenumwandlungen verhindert werden.

Durch das Brennen bei über 1200 °C werden vorhandene oder sich bildende unerwünschte Phasen, wie zum Beispiel solche aus der Melilith-Gruppe, wieder zerstört. Eine Temperatur von rund 1250 °C ist auch für die Bildung der hoch reaktiven Phase C₄(AₓF₍₁₋ₓ₎)₃$ optimal. Zum einen stellt diese Phase eine Aluminiumquelle dar, die C₅S₂$ anregen kann, so dass eine zusätzliche externe Aluminiumkomponente nicht oder nur in geringerer Menge notwendig ist. Zum anderen werden gerade bei der Verwendung von industriellen Nebenprodukten, wie z.B. Aschen und Schlacken, aber auch von z.B. tonhaltigen Materialien, als Teil der Rohmehlmischung unter Umständen erhebliche Mengen Al₂O₃ eingebracht, welche durch diese Verfahrensweise ökonomisch und ökologisch am sinnvollsten genutzt werden.

Durch die Temperung im zweiten Schritt wird Ternesit in ausreichender Menge (zurück-)gebildet. Durch die gezielte Temperatursteuerung durchläuft das Klinkerzwischenprodukt für eine Zeitspanne, die ausreichend ist, um Ternesit zu bilden, während der Temperung einen Temperaturbereich von 1200 °C bis zu einer unteren Grenze von 750 °C, vorzugsweise einen Bereich von 1150 bis 850 °C, und wird erst anschließend rapide abgekühlt. Es hat sich des weiteren gezeigt, dass verschiedene Aluminat- und Ferratphasen sowie Relikte der kristallinen Hochtemperaturphasen der Rohstoffe, wie zum Beispiel, aber nicht ausschließlich, C₄AF, C₂F, CF, CA₂, A₃S₂, C₂AS, etc., während des geregelten Kühlungsvorganges bei der Temperung mit vorhandenem C$ reagieren und zur Zunahme der gewünschten reaktiven Phasen C₅S₂$ und C₄(AₓF₍₁₋ₓ₎)₃$ führen. Durchläuft die Phase C₄(AₓF₍₁₋ₓ₎)₃$ (gebildet bei über 1200 °C) gezielt einen Bereich von 1150 °C bis 1050 °C, wird diese, durch die Konsumierung / Umwandlung von zum Beispiel C₄AF, C₂F, CF messbar eisenreicher und ihre Menge nimmt zu.

In der Rohmehlmischung enthaltenes Eisen wird in die Phase C₂AF und bevorzugt in die Phase C₄A₃$ eingebaut werden. Der Fremdioneneinbau und/oder die Zugabe von Mineralisatoren kann zu einer erhöhten Bildungsgeschwindigkeit der Phase in der heißen Zone führen, was wiederum potentiell die benötigte Verweildauer verringert und / oder zu ihrer quantitativen Zunahme führen kann. Die Bezeichnung Al₂O₃(Fe₂O₃) bedeutet ebenso wie in der Angabe C₄(AₓF₁₋ₓ)₃$ für die Klinkerphase, dass Aluminium teilweise durch Eisen ersetzbar ist, d.h. x ist eine Zahl von 0,1 bis 1,0, vorzugsweise von 0,8 bis 0,95. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Ein Nachweis für den Einbau von Eisen ist die quantitative Abnahme eisenreicher Phasen (z.B. Fe₃O₄, C₂F und C₄AF), die Zunahme der Phase C₄A₃$ bzw. C₄(AₓFe₍₁₋ₓ₎)₃$, sowie die Zunahme der Peakintensitäten und des Gitterparameters c (Å) [Kristallsystem: Orthorhombisch] von 9,1610 [PDF-Nummer: 01-085-2210, Tetracalcium hexaaluminate sulfate(VI) - Ca₄ (Al₆O₁₂)(SO₄), ICSD Collection Kode: 080361, Calculated from ICSD using POWD-12++, (1997), Struktur: Calos, N.J., Kennard, C.H.L., Whittaker, A.K., Davis, R.L., J. Solid State Chem., 119, 1, (1995)] über 9,1784 [PDF-Nummer: 00-051-0162, Calcium Aluminum Iron Oxide Sulfate - Ca₄((Al_{0.95}Fe_{0.05}))₆O₁₂(SO₄), ICSD Collection Kode: -, Primärer Verweis: Schmidt, R., Pöllmann, H., Martin-Luther-Univ., Halle, Germany., ICDD Grant-in-Aid, (1999)] bis zu Werten von über 9,2000. Die Prüfung auf eine etwaige Mischkristallbildung kann ebenfalls mittels der Bestimmung der Besetzungsfaktoren bei einer Rietveld-Anpassung durch Unter- oder Gemischtbesetzungen einzelner Atomlagen ermittelt werden. Ein weiterer rein qualitativer Indikator ist die zum Teil deutliche Farbveränderung der Klinker. So ändert sich die Farbe der Klinker von einem Kastanien- / Ockerbraun über Grünbraun bis hin zu einem hellen Grauton.

Ternesit kommt auch als Mineral vor, jedoch sind keine Lagerstätten bekannt, aus denen es in ausreichender Menge bzw. Reinheit gewonnen werden kann, so dass der Einsatz von "natürlichem" Ternesit zwar möglich, in der Praxis aber unwirtschaftlich ist. Eine Herstellung durch Sinterung geeigneter Rohstoffe ist erfindungsgemäß vorzuziehen.

Die Rohstoffe für die Herstellung des erfindungsgemäßen TernesitKlinkers werden in an sich bekannter Weise auf übliche Feinheiten gemahlen. Feinheiten von 2000 bis 10000 cm²/g, vorzugsweise im Bereich von 3000 bis 6000 cm²/g und besonders bevorzugt von 4000 bis 5000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Soll die Herstellung möglichst reines C₅S₂$ ergeben, werden Rohstoffe gewählt, welche neben Quellen für CaO, SiO₂ und SO₃ keine oder nur wenig weitere Bestandteile enthalten. Die Umsetzung von Calciumcarbonat mit Quarzmehl und Calciumsulfat im Temperaturbereich von 900 bis 1200 °C, vorzugsweise 1050 bis 1150 °C ergibt C₅S₂$ mit einer Reinheit von > 99 %. Bei Temperaturen > 1200 °C ist die Zugabe von Mineralisatoren zu berücksichtigen.

Es ist jedoch bevorzugt, wenn zur Herstellung von C₅S₂$ ein möglichst hoher Anteil kostengünstiger und umweltverträglicher Rohstoffe zum Einsatz kommt. Umweltverträglich meint hierbei einen möglichst geringen Energieeinsatz und/oder die Schonung natürlicher Rohstoffe bzw. hochwertiger Abfall- und Nebenprodukte. Dem Patent EP 1 171 398 B1 ist die Verwendung solcher Materialien als Komponente der Rohmehlmischung nicht zu entnehmen.

Eine Umsetzung von etwa 25 % der Flugasche FA1 (siehe Beispiele 2 und 3) mit etwa 45 % Kalkstein K1, etwa 8 % Quarz (Merck, p.a.) und etwa 20 % MicroA (natürlicher Anhydrit) ergab einen Klinker mit einem C₅S₂$ Gehalt von > 70 % und bei Umsetzung von ∼8 % Metakaolin, ∼58 % K1, ∼23 % Micro A und ∼10 % SiO₂ wurden Reinheiten von > 80 % erreicht.

Je nach Rohstoffzusammensetzung, insbesondere durch die Gegenwart von Mineralisatoren, kann ein einstufiges Verfahren zur Herstellung eines Ternesitklinkers, auch bei höhere Temperaturen von z.B. bis 1300 °C geeignet sein, beispielsweise, wenn relevante Mengen Phosphor enthalten sind, wie es bei einer Verwendung von Phosphorgips der Fall ist. Im Unterschied zu den bekannten Verfahren/Klinkern steht erfindungsgemäß jedoch die Bildung von Ternesit aber auch von reaktiven Polymorphen des Dicalciumsilikates im Fokus, die Sintertemperatur wird daher für dessen Bildung optimiert. Entsprechend der zugrunde liegenden Erfindung, können bei diesen Temperaturen, neben Ternesit, auch vermehrt reaktive Polymorphe des Dicalciumsilikates auftreten. Im Stand der Technik wurde dagegen die Sintertemperatur für die Bildung von C₄A₃$ optimiert, Ternesit sollte möglichst nicht gebildet werden.

Der C₅S₂$ als Hauptkomponente enthaltende Klinker bzw. ein daraus durch Mahlen ohne Zusätze erhaltener Zement enthält erfindungsgemäß die folgenden Komponenten in den angegebenen Anteilen:
- C₅S₂$ 10 bis 100 Gew.-%,
   bevorzugt 20 bis 90 Gew.-% und noch stärker bevorzugt 40 bis 70 Gew.-%
- (α, β) C₂S 0 bis 90 Gew.-%,
   bevorzugt 10 bis 80 Gew.-% und noch stärker bevorzugt 30 bis 60 Gew.-%
- C₄(AₓF₍₁₋ₓ₎)₃$ 0 bis 30 Gew.-%,
   bevorzugt 5 bis 20 Gew.-% und noch stärker bevorzugt 8 bis 15 Gew.-%
- C₂(A_{y}F_{(1-y)}) 0 bis 30 Gew.-%,
   bevorzugt 5 bis 20 Gew.-% und noch stärker bevorzugt 8 bis 15 Gew.-%
- Reaktive Aluminate 0 bis 20 Gew.-%,
   bevorzugt 1 bis 15 Gew.-% und noch stärker bevorzugt 3 bis 10 Gew.-%
- Periklas (M) 0 bis 25 Gew.-%,
   bevorzugt 1 bis 15 Gew.-% und noch stärker bevorzugt 2 bis 10 Gew.-%
- Nebenphasen 0 bis 30 Gew.-%,
   bevorzugt 3 bis 20 Gew.-% und noch stärker bevorzugt 5 bis 10 Gew.-% bezogen auf die gesamte Menge an Klinker/Zement, wobei sich die Anteile der Phasen zu 100% addieren. Bei der Phase C₄(AₓF₍₁₋ₓ₎)₃$ liegt x im Bereich von 0,1 bis 1, vorzugsweise von 0,8 bis 0,95. Bei der Phase C₂(A_{y}F_{(1-y)}) liegt y im Bereich von 0,2 bis 0,8 und vorzugsweise im Bereich von 0,4 bis 0,6.

Die Angabe (α, β) C₂S bedeutet, dass es sich um Polymorphe von C₂S und deren Gemische handeln kann, wobei die reaktiven α Polymorphe (z.B. a, α'_{L}, α'_{H}) bevorzugt werden. Vorzugsweise sind mindestens 5 Gew.-% a Polymorphe von C₂S enthalten, da diese vorteilhaft zu einer hohen Frühfestigkeit beitragen.

Durch die Zugabe von Mineralisatoren zum Rohmehl kann ein Teil, bis hin zum überwiegenden Teil, des Dicalciumsilikates in Form von Mischkristallen als dotiertes "α" C₂S, wie zum Beispiel in Gegenwart von P₂O₅ als Calcium-Phosphat-Silikat [Ca₂SiO₄ •0.05Ca₃(PO₄)₂], vorkommen. Solche Verbindungen fallen ebenfalls in die Gruppe der reaktiven α C₂S Polymorphe und den Schutzbereich der vorliegenden Erfindung. Ebenfalls kann der etwaige Mineralisator, in Abhängigkeit von der zugesetzten Menge, der Aufheizrate, etc., in die Struktur von z.B. C₅S₂$ eingebaut werden.

Ein Ternesitklinker enthaltend unter anderem reaktive α Polymorphe von C₂S sowie dotiertes "a" C₂S und dotiertes C₅S₂$ wurde noch nie beschrieben und ist auch dem Patent EP 1 171 398 B1 nicht zu entnehmen.

Unter reaktiven Aluminaten sind zum Beispiel, aber nicht ausschließlich, C₃A, CA und C₁₂A₇ zu verstehen.

Als Nebenphasen können zum Beispiel, aber nicht ausschließlich, Alkali/Erdalkali-Sulfate, Quarze, Spinelle, Olivine, Pyroxene, Vertreter der Melilith- und Merwinit-Gruppe, Apatite, Ellestadite, Silicocarnotit, Freikalk, Spurrit, Quarz und/oder ein röntgenamorpher Phasenbestand / eine Glasphase, in einem Anteil von 0 Gew.-% bis 30 Gew.-%, vorzugsweise von 2 Gew.-% bis.20 Gew.-% und besonders bevorzugt von 5 Gew.-% bis 15 Gew.-% auftreten. Der Freikalkgehalt des Klinkers liegt unter 5 Gew.-%, vorzugsweise unter 2 Gew.-% und besonders bevorzugt unter 1 Gew.-%. In bevorzugter Ausführung enthält der Ternesitklinker 1 bis 10 Gew.-%, vorzugsweise 2 bis 8 Gew.-% und noch stärker bevorzugt 3 bis 5 Gew.-% mindestens einer röntgenamorphen Phase / einer Glasphase.

Ein Ternesitklinker enthaltend unter anderem einen röntgenamorphen Phasenbestand / eine Glasphase wurde bisher nicht beschrieben und ist auch dem Patent EP 1 171 398 B1 nicht zu entnehmen.

Die Gehalte der Hauptoxide eines C₅S₂$ als Hauptphase enthaltenden, separat hergestellten Klinkers umfassen folgende Bereiche:
- CaO 40 bis 70 Gew.-%, bevorzugt 45 bis 60 Gew.-% und noch stärker bevorzugt 50 bis 55 Gew.-%
- SiO₂ 5 bis 30 Gew.-%, bevorzugt 10 bis 25 Gew.-% und noch stärker bevorzugt 15 bis 23 Gew.-%
- SO₃ 3 bis 30 Gew.-%, bevorzugt 5 bis 26 Gew.-% und noch stärker bevorzugt 8 bis 22 Gew.-%
- ∑(Al₂O₃+Fe₂O₃) 0 bis 40 Gew.-%, bevorzugt 5 bis 30 Gew.-% und noch stärker bevorzugt 8 bis 20 Gew.-%
- MgO 0 bis 25 Gew.-%, bevorzugt 2 bis 15 Gew.-% und noch stärker bevorzugt 5 bis 10 Gew.-%
bezogen auf die gesamte Menge an Klinker/Zement, wobei sich die Anteile der Gehalte zu 100% addieren.

Eine gezielte Herstellung eines C₅S₂$ Klinkers, die Stabilisierung von C₅S₂$ bei höheren Temperaturen, die mögliche erhöhte Bildungsrate von α C₂S, Mischkristallen des Dicalciumsilikats sowie die Bildung mindestens einer Schmelzphase im Klinker und der Einsatz des Ternesitklinkers als Additiv in Kombination mit reaktiven, aluminiumreichen Systemen, zur Steigerung der Frühfestigkeit von Bindemitteln wurde bisher nicht beschrieben. Es ist ein völlig neuartiger Ansatz zu einer Erhöhung der Frühfestigkeit und/oder der Dauerhaftigkeit von hydraulischen und latent-hydraulischen Bindemittelsystemen.

Ternesit bzw. ternesesitreicher Klinker als eine Komponente des erfindungsgemäßen Additivs wird dann analog zu den bekannten Klinkern zu Zement oder Bindemittelmischungen weiterverarbeitet.

Zur Herstellung von Zement bzw. Bindemittelmischungen wird Ternesit bzw. ternesitreicher Klinker entweder gemeinsam mit einer oder mehreren oder allen oder getrennt von den weiteren zu mahlenden Bindemittelkomponenten in an sich bekannter Weise mit oder ohne zusätzliche Sulfatträger auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen.

Als Sulfatträger eignen sich besonders Alkali- und / oder Erdalkalisulfate, vorzugsweise in Form von Gips und / oder Halbhydrat und / oder Anhydrit aber auch Magnesium-, Natrium- und Kaliumsulfat. Da Ternesit im Verlauf der Reaktion ebenfalls Sulfat bereitstellt, kann auch mit weniger anderweitigem Sulfatträger oder ohne einen solchen ein gut verarbeitbares Bindemittel erhalten werden.

Die erfindungsgemäße Steuerung der Frühfestigkeit erfolgt durch Zumischung von Ternesit bzw. ternesitreichem Klinker mit der Aluminiumkomponente zu einer Bindemittelmischung. Der gemahlene Ternesit bzw. ternesitreiche Klinker wird mit einer Aluminiumkomponente kombiniert und dem Bindemittel zugefügt, oder aber, Ternesit bzw. ternesitreicher Klinker und Aluminiumkomponente werden separat zugefügt.

Dem Bindemittel können auch von sich aus hydraulisch reaktive Materialien wie Calciumaluminat, Calciumaluminatzement, Calciumsulfoaluminat, Calciumsulfoaluminatzement, Geopolymerzement und/oder latent-hydraulische Materialien wie gebrannter Ölschiefer, Gehlenitgläser oder Kombinationen davon, zugefügt werden. Die Mischung mit hydraulisch oder latent-hydraulisch reaktiven Komponenten ist zum Erreichen einer nutzbaren hydraulischen Reaktivität nicht erforderlich, vielmehr zeigt der zu Zement gemahlenen Ternesit durch Kombination mit einer nicht hydraulisch reaktiven Aluminiumquelle die gewünschte hydraulische Reaktivität.

Das erfindungsgemäße Additiv umfasst zumindest Ternesit und eine Aluminiumkomponente. Ternesit kann in Form eines ternesitreichen Klinkers vorliegen. Es können weitere Bestandteile enthalten sein, z.B. weitere Beschleuniger. Die mindestens zwei Bestandteile des Additivs liegen in folgenden Anteilen vor: Ternesit bzw. Ternesitklinker im Bereich von 10 bis 99 Gew.-%, bevorzugt 20 bis 95 Gew.-% und noch stärker bevorzugt 40 bis 90 Gew.-% und Quelle von schnell verfügbarem Aluminium im Bereich von 1 bis 90 Gew.-%, bevorzugt 5 bis 80 Gew.-% und noch stärker bevorzugt 10 bis 60 Gew.-%.

Als Zement bzw. Bindemittel, dessen Frühfestigkeit gesteuert werden kann, kommen hydraulsiche Bindemittel, wie Portlandzement, Portlandkompositzement, Hochofenzement, Puzzolanzement, Multikomponenten/Komposit-Zement, Sulfathüttensandzement, Calciumaluminatzement, Calciumsulfoaluminatzement, Geopolymerzement usw. und latent-hydraulische Bindemittel wie Hüttensand, kalkreiche Flugaschen usw. in Betracht. Typischerweise enthält der Zement bzw. das Bindemittel neben den Bestandteilen des erfindungsgemäßen Additivs außerdem Alkali- und Erdalkalisulfate und kann Freikalk enthalten.

Bevorzugt enthält das Bindemittel außerdem Zusatzstoffe. Bei diesen handelt es sich um nicht hydraulisch aktive Stoffe, wie zum Beispiel gemahlener Kalkstein / Dolomit, gefälltes CaCO₃, Mg(OH)₂, Ca(OH)₂, Silica fume, etc. und diese können in einer Menge im Bereich von 0,01 bis 20 Gew.-%, vorzugsweise von 0,5 bis 15 Gew.-% und noch stärker bevorzugt von 1 bis 10 Gew.-% dosiert werden.

Das erfindungsgemäße Additiv, das heißt die Summe von Ternesit(klinker) mit mindestens einer Quelle von schnell verfügbarem Aluminium, ist in der Bindemittelmischung in einem Anteil von 1 bis 20 Gew.-%, vorzugsweise von 2 bis 15 Gew.-% und besonders bevorzugt von 5 bis 10 Gew.-% enthalten.

Bei der Verarbeitung des Zementes bzw. Bindemittels ist ein Wasser / Bindemittelwert von 0,2 bis 2 geeignet, bevorzugt von 0,3 bis 0,8 und besonders bevorzugt von 0,35 bis 0,5.

Der Zement bzw. die Bindemittelmischung daraus kann neben dem erfindungsgemäßen Additiv eines oder mehrere Zusatzmittel enthalten. Vorzugsweise enthält es einen oder mehrere weitere Abbinde- und / oder Erhärtungsbeschleuniger, vorzugsweise ausgewählt unter Lithiumsalzen und -hydroxiden, anderen Alkalisalzen und -hydroxiden, Alkalisilikaten. Es ist weiter bevorzugt, wenn Betonverflüssiger und / oder Fließmittel, vorzugsweise auf Basis von Ligninsulfonaten, sulfoniertem Naphthalin-, Melamin- oder Phenolformaldehydkondensat, oder auf Basis von Acrylsäure- Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und Borate, Oxalate, Sulfanilsäure, Aminocarbonsäuren, Salicylsäure und Acetylsalicylsäure, Dialdehyde enthalten sind.

Zusätze, wie zum Beispiel Alkali-Aluminate und Alkalisalze, -silikate und - hydroxide, welche den pH-Wert der Lösung und damit einhergehend die Reaktivität von C₅S₂$ zusätzlich erhöhen, sind besonders bevorzugt und können in einer Menge im Bereich von 0,01 bis 10 Gew.-%, vorzugsweise von 0,5 bis 5 Gew.-% und noch stärker bevorzugt von 1 bis 2 Gew.-% dosiert werden.

Die Reaktivität von Ternesit hängt insbesondere von der Verfügbarkeit von einem Reaktionspartner, wie zum Beispiel, aber nicht ausschließlich, Aluminium aber auch von dem in Lösung befindlichen Sulfat ab. Wird Ternesit mit Wasser gemischt, geht ein Teil des Calciums, Siliziums und Sulfats in Lösung. Jedoch scheint durch das in Lösung befindliche Sulfat eine Inhibition der weiteren Reaktion des Calciumsilikates zu bestehen. In der von Gegenwart von Aluminium, löslichen Sulfaten und Calciumträgern bildet sich AFₜ und / oder AFₘ, wodurch Sulfat verbraucht und die weitere Reaktion von C₅S₂$ / Bildung von (N,C)-(A)-S-H und / oder Strätlingit (C₂ASH₈) angeregt wird. Ist zu einem Zeitpunkt das verfügbare Aluminium verbraucht, wird die Lösung wieder mit Sulfat angereichert und die Reaktion von C₅S₂$ wird gestoppt / verlangsamt. Hierdurch wird jedoch schon gebildetes AFₜ, durch das in der Porenlösung verfügbare Sulfat, stabilisiert und eine Umbildung zu AFₘ vermieden / minimiert. Die beschriebenen Parameter / Eigenschaften von C₅S₂$ können damit zu einer höheren Früh- und Endfestigkeit sowie Dauerhaftigkeit von diversen Bindemitteln beitragen.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.
dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 1 sind die verwendeten latent-hydraulischen und/oder puzzolanischen Materialien bzw. Rohstoffe, mit denen die im Folgenden beschriebenen Beispiele durchgeführt wurden, anhand ihrer oxidischen Hauptbestandteile und ihrer Mahlfeinheit charakterisiert. Der Gewichtsverlust nach einem Tempern bei 1050 °C ist ebenfalls angegeben.

**Tabelle 1**

| Material | | Kalkstein | Hüttens. | Flugasche | Sulfat | Al-Korr. | Metakaolin |
|---|---|---|---|---|---|---|---|
| Probe | | K1 | BFS | FA1 | MicroA | Al(OH)₃ | MK |
| RFA | Einheit | | | | | | |
| GV 1050 °C | % | 43,09 | 1,80 | 0,82 | 4,64 | 34,64 | 1,91 |
| SiO₂ | | 1,53 | 36,48 | 28,50 | 4,17 | -- | 48,00 |
| Al₂O₃ | | 0,35 | 11,58 | 12,50 | 1,36 | 65,36 | 41,60 |
| TiO₂ | | 0,03 | 0,88 | 1,05 | 0,04 | -- | 0,00 |
| MnO | | 0,01 | 0,37 | 0,18 | 0,00 | -- | 0,00 |
| Fe₂O₃ | | 0,19 | 0,52 | 5,18 | 0,37 | -- | 1,80 |
| CaO | | 54,50 | 38,46 | 37,40 | 37,40 | -- | 5,70 |
| MgO | | 0,22 | 7,52 | 4,81 | 1,82 | -- | 0,10 |
| K₂O | | 0,04 | 0,44 | 0,28 | 0,28 | -- | 0,95 |
| Na₂O | | 0,00 | 0,18 | 0,07 | 0,06 | -- | 0,00 |
| SO₃ | | 0,01 | 2,19 | 7,71 | 49,80 | -- | 0,00 |
| P₂O₅ | | 0,01 | 0,00 | 1,27 | 0,00 | -- | 0,00 |
| Summe | | 99,98 | 100,42 | 99,77 | 99,94 | 100,00 | 100,06 |
| Amorph | % | / | >99 | 38,0 | -- | -- | >95 |
| Dichte | g/cm³ | 2,64 | 2,81 | 2,82 | -- | -- | 2,54 |
| Mahlfeinheit nach Blaine | cm²/g | 3350 | 4370 | 4380 | -- | -- | -- |

### Beispiel 1 Tₚᵤᵣ

Eine stöchiometrische Mischung aus CaCO₃ [Merck, p.a.], CaSO₄ [Merck, p.a.], Quarzmehl [Merck, p.a.], wurde 1h bei 1100 °C gebrannt, anschließend rapide gekühlt, gemahlen und ein weiteres Mal 1h bei 1100 °C gebrannt und rapide gekühlt. Dies ergab einen Ternesitklinker mit >99% C₅S₂$.

### Beispiel 2 TK_{FA}

Die Rohmischung bestand aus 45 Gew.-% Kalkstein (K1) + 27 Gew.-% FA1, 20 Gew.-% MicroA und 8 Gew.-% Quarzmehl (Merck, p.a.). Das Rohmehl wurde in bei 1100 °C gesintert und durchlief nach dem Sintern zur Temperung ein Kühlprogramm bei dem die Temperatur über etwa 35 min von 1100 °C auf 850 °C gesenkt wurde. Der Klinker wurde dann rapide an der Luft abgekühlt.

### Beispiel 3 TK_{AGS}

Die Rohmischung bestand aus 58 Gew.-% K1 + 8 Gew.-% MK, 24 Gew.-% MircoA und 10 Gew.-% Quarzmehl (Merck, p.a.). Das Rohmehl durchlief dasselbe Programm wie in Beispiel 2.

Die berechnete chemische und die gemessene mineralogische Zusammensetzung der Ternesit-Klinkerqualitäten der Beispiel 1 bis 3 ist in Tabelle 2 angegeben.

**Tabelle 2, Chemische (berechnet) und mineralogische Zusammensetzung der Klinker aus den Beispielen 1 bis 3**

| **Oxide** | **Tₚᵤᵣ** | **TK_{FA}** | **TK_{AGS}** |
|---|---|---|---|
| SiO₂ | 25,00% | 21,30% | 22,16% |
| Al₂O₃ | -- | 4,75% | 4,94% |
| TiO₂ | -- | 0,38% | 0,04% |
| MnO | -- | 0,07% | 0,01% |
| Fe₂O₃ | -- | 1,96% | 0,45% |
| CaO | 58,34% | 53,20% | 55,34% |
| MgO | -- | 2,23% | 0,77% |
| K₂O | -- | 0,19% | 0,22% |
| Na₂O | -- | 0,04% | 0,02% |
| SO₃ | 16,66% | 15,44% | 16,06% |
| P₂O₅ | -- | 0,44% | 0,01% |

| **Phasen** | | | |
|---|---|---|---|
| Anhydrit | 0,4 | 0,3 | 0,2 |
| C₃A (cub) | -- | 2,2 | -- |
| C₃A (orth) | -- | 1,2 | 0,4 |
| C₂S a 'H | -- | 2,7 | 1,4 |
| C₂S beta | -- | 5,7 | 3,2 |
| C₂S gamma | -- | 1,1 | 0,4 |
| ∑C₂S | -- | 9,5 | 5,0 |
| Ternesit | 99,2 | 74,9 | 85,5 |
| Freikalk | <0,1 | 0,3 | 0,3 |
| Periklas | -- | 1,2 | 0,5 |
| C₄A₃S | -- | 9,3 | 7,0 |
| Augit | -- | 1,2 | 1,1 |
| Quarz | 0,4 | -- | -- |

| **Verhältnisse** | | | |
|---|---|---|---|
| CaO/Al₂O₃ | -- | 11,21 | 11,21 |
| Al₂O₃/Fe₂O₃ | -- | 2,42 | 10,92 |
| SO₃ / (Al₂O₃+Fe₂O₃) | -- | 2,30 | 2,98 |
| SO₃/SiO₂ | 0,67 | 0,72 | 0,72 |
| CaO/SO₃ | 3,50 | 3,45 | 3,45 |
| CaO/SiO₂ | 2,33 | 2,50 | 2,50 |
| MgO/SiO₂ | 0,00 | 0,10 | 0,03 |

### Beispiel 4 Erhärtung

Die Beurteilung der Erhärtung erfolgt mit einem halb-quantitativen Testverfahren. Dazu werden 20 g eines Bindemittels bei 20 °C und definiertem w/z Wert (demin. Wasser) von Hand in einem Plastikbecher mit einem Spatellöffel 2 Minuten lang angerührt, in eine kleine, luftdicht verschließbare Plastiktüte überführt und danach das Erstarrungs- und Erhärtungsverhalten des Leims durch Biegen und Fingerdruck geprüft und nach einem Ziffernsystem beurteilt. Die Methode eignet sich besonders zur relativen Beurteilung von Verfestigungsvorgängen vor und während des Erstarrens von Bindemitteln im Rahmen von Serienproben, die schrittweise und systematisch verändert werden. Sie stellt eine sinnvolle Vorstufe zu Normprüfungen dar, bei der unter Verwendung kleiner Materialmengen die Wirkungstendenz bestimmter Additive oder Bindemittelmischungen, ggf. auch mit Hilfe einer relativ großen Zahl von Einzelversuchen, erkennbar wird. "+ / -" steht für das Ansteifen der Pasten und ein oder mehrere "+" zeigen dabei die Verfestigung und den zunehmenden Härtegrad der Paste an, wobei "+++" für eine sehr hohe Festigkeit steht. Bei vergleichenden Mörtel- und Druckfestigkeitsversuchen korrelierte "+++" mit einer Festigkeit zwischen 2 und 10 MPa. Ein "-" zeigt an, dass keine wahrnehmbare Verfestigung eingetreten ist.

Bindemittel bzw. Mischungen wurden mit einem w/z von 0,5 aus einem Ternesitklinker entsprechend Beispiel 1, Na₂Al₂O₄ = NA (Merck, p.a.), einem Metakaolin = MK und einem amorphen Aluminiumhydroxid = Al(OH)₃ (Sika, Geloxal) hergestellt. Die Mischungsanteile sind in Tabelle 3 und die Messungen der Festigkeitsentwicklung in Tabelle 4 zusammengefasst. NA wurde als Feststoff mit dem Ternesitklinker gemeinsam vermahlen, da wenn NA in Anmachwasser gelöst vorlag, eine sofortige Verfestigung im Kontakt mit Ternesit eingetreten ist und eine Bewertung entsprechend des halb-quantitativen Testverfahrens nicht mehr möglich war bzw. der Einsatz von Verzögerern notwendig wurde.

**Tabelle 3**

| **Mischung** | **Tₚᵤᵣ** | **Na₂Al₂O₄** | **MetaKaolin** | **AlOH₃** |
|---|---|---|---|---|
| | **[%]** | | | |
| T | 100 | | | |
| NA | | 100 | | |
| MK | | | 100 | |
| AH₃ | | | | 100 |
| 9T+1NA | 90 | 10 | | |
| 8T+2NA | 80 | 20 | | |
| T-MK | 70 | | 30 | |
| 9T+1AH₃ | 90 | | | 10 |
| 8T+2AH₃ | 80 | | | 20 |
| 7T+3AH₃ | 70 | | | 30 |
| 8T+2NA+VZ* | 80 | 20 | | |
| 8T+2NA+VZ** | 80 | 20 | | |
| VZ* = Verzögersystem | | | | |
| VZ** = Verzögersystem, Na₂Al₂O₄ im Anmachwasser gelöst | | | | |

**Tabelle 4**

| **Mischung** | **Zeit [Minuten]** | | | | | | | | | |
|---|---|---|---|---|---|---|---|---|---|---|
| | 0,5 | 1 | 5 | 10 | 30 | 60 | 120 | 240 | 360 | 1440 |
| T | - | - | - | - | - | - | - | - | - | - |
| NA | - | - | - | - | - | - | - | - | - | - |
| MK | - | - | - | - | - | - | - | - | - | - |
| AH₃ | - | - | - | - | - | - | - | - | - | - |
| 9T+1NA | + | + | ++ | ++ | ++ | ++ | +++ | +++ | +++ | +++ |
| 8T+2NA | + | ++ | ++ | ++ | ++ | +++ | +++ | +++ | +++ | +++ |
| 7T+3MK | - | - | - | - | + | + | + | ++ | ++ | +++ |
| 9T+1AH₃ | - | - | - | - | +/- | +/- | + | + | + | ++ |
| 8T+2AH₃ | - | - | - | - | + | + | + | ++ | ++ | ++ |
| 7T+3AH₃ | - | - | - | - | + | + | + | ++ | ++ | +++ |
| 8T+2NA+VZ* | - | - | - | ++ | ++ | +++ | +++ | +++ | +++ | +++ |
| 8T+2NA+VZ*⁺ | - | - | + | ++ | ++ | +++ | +++ | +++ | +++ | +++ |

Es ist erkennbar, dass weder die Aluminiumkomponente noch Ternesit allein eine hydraulische Reaktion zeigten. Jedoch zeigte die Mischung aus Aluminiumkomponente und Ternesit schon innerhalb weniger Sekunden bzw. Stunden eine deutliche Verfestigung bis hin zu einer Aushärtung.

### Beispiel 5

Ein Additiv aus 8 Gewichtsteilen Ternesit von Beispiel 1 mit 2 Gewichtsteilen Na₂Al₂O₄ (TNA, Feststoff) wurde in verschiedenen Verhältnissen mit Hüttensand (BFS) und/oder Portlandzement (PC) (CEMI 42.5, Werk Leimen, HeidelbergCement AG, DE) zu einem Bindemittel gemischt (siehe Tabelle 5). Die Beurteilung der Erhärtung erfolgte entsprechend Beispiel 4. Die Ergebnisse sind in Tabelle 6 angegeben.

**Tabelle 5**

| **Mischung** | **TNA** | **BFS** | **PC** | **NA** |
|---|---|---|---|---|
| | **[%]** | | | |
| BFS | | 100 | | |
| 9,95BFS+0,05NA | | 99,5 | | 0,5 |
| 9,95BFS+0,05TNA | 0,5 | 99,5 | | |
| 9,9BFS+0,1TNA | 1 | 99 | | |
| 9,8BFS+0,2TNA | 2 | 98 | | |
| PC | | | 100 | |
| 9,95PC+0,05NA | | | 99,5 | 0,5 |
| 9.9PC+0,1NA | | | 99 | 1 |
| 9,8PC+0,2NA | | | 98 | 2 |
| 9,5PC+0,5TNA | 5 | | 95 | |
| 9BFS+1PC | | 90 | 10 | |
| 8,95BFS+1PC+0,05TNA | 0,5 | 89,5 | 10 | |
| 8,9 BFS+1PC+0,1TNA | 1 | 89 | 10 | |
| 8,8 BFS+1PC+0,2TNA | 2 | 88 | 10 | |
| 8BFS+2PC | | | | |
| 7,95BFS+2PC+0,05TNA | 0,5 | 79,5 | 20 | |
| 7,9 BFS+2PC+0,1TNA | 1 | 79 | 20 | |
| 7,8 BFS+2PC+0,2TNA | 2 | 78 | 20 | |
| 5BFS+5PC | | | | |
| 4,95BFS+5PC+0,05TNA | 0,5 | 49,5 | 50 | |
| 4,9 BFS+5PC+0,1TNA | 1 | 49 | 50 | |
| 4,8 BFS+5PC+0,2TNA | 2 | 48 | 50 | |

**Tabelle 6**

| **Mischung** | **Zeit [Stunden]** | | | | | | | |
|---|---|---|---|---|---|---|---|---|
| | 0,5 | 1 | 2 | 4 | 6 | 24 | 48 | 72 |
| BFS | - | - | - | - | - | - | - | - |
| 9,95BFS+0,05NA | - | - | - | - | - | - | - | - |
| 9,95BFS+0,05TNA | + | + | ++ | ++ | ++ | +++ | +++ | +++ |
| 9,9BFS+0,1TNA | + | + | + | + | + | ++ | +++ | +++ |
| 9,8BFS+0,2TNA | + | + | + | + | + | + | ++ | +++ |
| PC | - | - | - | + | ++ | +++ | +++ | +++ |
| 9,95PC+0,05NA | - | - | +/- | + | ++ | +++ | +++ | +++ |
| 9,9PC+0,1 NA | - | - | + | ++ | ++ | +++ | +++ | +++ |
| 9,8PC+0,2NA | - | - | - | - | +/- | ++ | +++ | +++ |
| 9,5PC+0,5TNA | + | ++ | ++ | +++ | +++ | +++ | +++ | +++ |
| 9BFS+1PC | - | - | - | + | + | ++ | +++ | +++ |
| 8,95BFS+1 PC+0,05TNA | - | + | + | ++ | ++ | +++ | +++ | +++ |
| 8,9 BFS+1PC+0,1TNA | + | + | ++ | ++ | ++ | +++ | +++ | +++ |
| 8,8 BFS+1PC+0,2TNA | + | + | + | + | + | ++ | +++ | +++ |
| 8BFS+2PC | - | - | - | + | + | ++ | +++ | +++ |
| 7,95BFS+2PC+0,05TNA | - | + | ++ | ++ | ++ | +++ | +++ | +++ |
| 7,9 BFS+2PC+0,1TNA | + | + | ++ | ++ | ++ | +++ | +++ | +++ |
| 7,8 BFS+2PC+0,2TNA | + | ++ | ++ | +++ | +++ | +++ | +++ | +++ |
| 5BFS+5PC | - | - | - | + | ++ | +++ | +++ | +++ |
| 4,95BFS+5PC+0,05TNA | - | + | + | ++ | ++ | +++ | +++ | +++ |
| 4,9 BFS+5PC+0,1TNA | + | + | ++ | ++ | +++ | +++ | +++ | +++ |
| 4,8 BFS+5PC+0,2TNA | + | + | +++ | +++ | +++ | +++ | +++ | +++ |

Es zeigte sich, dass alle Proben, welche das Additiv enthielten, eine frühere Verfestigung und höhere Festigkeiten aufwiesen. Pasten, die mit dem erfindungsgemäßen Additiv hergestellt wurden, zeigten teilweise bereits innerhalb von 30 Minuten bis 6 Stunden eine deutliche Verfestigung und nachfolgende Erhärtung.

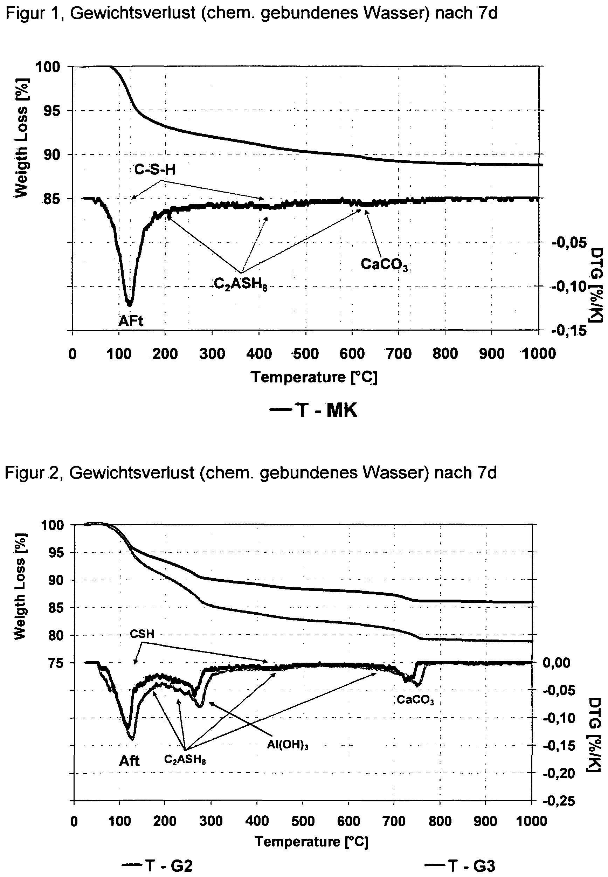

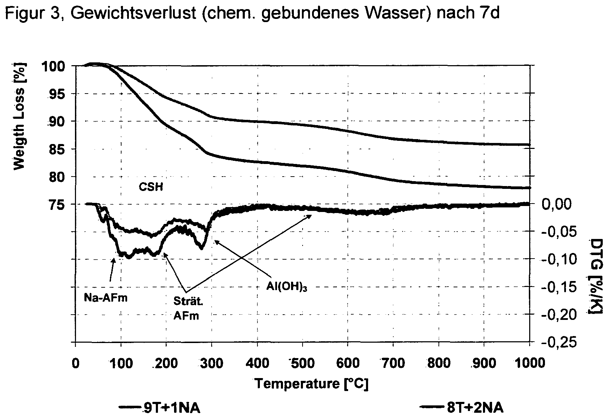

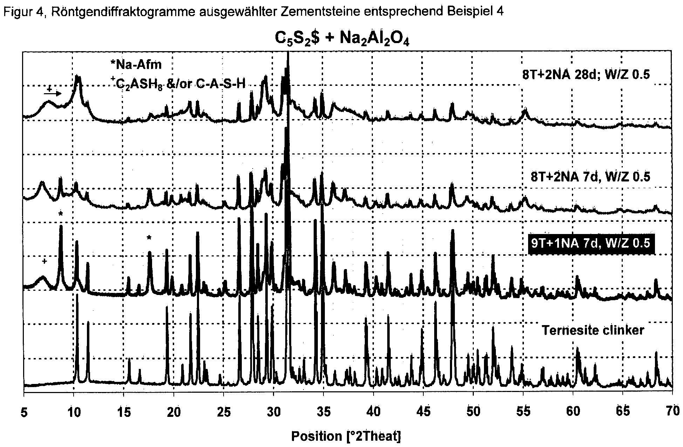

Die Figuren 1 bis 3 zeigen thermogravimetrische Messungen von hydratisierten Mischungen aus Ternesit mit Metakaolin (Figur 1), Ternesit mit Al(OH)₃ (Figur 2) und Ternesit mit NaAlO₂ (Figur 3). Es zeigt sich eindeutig, dass verschiedene Hydratphasen, wie zum Beispiel AFt, AFm und C-(A)-S-H, gebildet werden. Figur 4 zeigt Röntgendiffraktogramme von Bindemitteln aus Ternesit mit NaAlO₂ under deren Phasenentwicklung über die Zeit. Diese belegen eindeutig eine fortschreitende Hydratation und Phasenumsetzungen.

## Patentansprüche

1. Verfahren zur Beschleunigung der Erhärtung von hydraulischen oder latent-hydraulischen Bindemitteln, **dadurch gekennzeichnet, dass** dem Bindemittel Ternesit und eine nicht hydraulisch reaktive Aluminiumkomponente, ausgewählt aus gut wasserlöslichen Aluminiumverbindungen und solchen, die eine nur geringe Löslichkeit haben, wobei aber der Lösungsvorgang sehr rasch verläuft, so dass Aluminium in dem Maße, wie es umgesetzt wird, nachgeliefert wird, zugesetzt werden.

2. Verfahren gemäß Anspruch 1, **dadurch gekennzeichnet, dass** die Aluminiumkomponente ausgewählt ist unter löslichen Alkalialuminaten, Erdalkalialuminaten, Aluminiumsalzen, Aluminiumhydroxiden, Aluminiumoxidhydroxiden, künstlichen Puzzolanen, natürlichen Puzzolanen und Kombinationen davon.

3. Verfahren gemäß Anspruch 2, **dadurch gekennzeichnet, dass** als Aluminiumkomponente Na₂Al₂O₄, K₂Al₂O₄, Aluminiumnitrat, -carbonat, -acetat, -chlorid, -formiat, -sulfat, amorphes/reaktives Aluminiumhydroxid und/oder Aluminiumoxidhydroxid und/oder Metakaolin verwendet wird.

4. Verfahren gemäß einem der Ansprüche 1 bis 3, **dadurch gekennzeichnet, dass** als Ternesit ein Ternesitklinker enthaltend 10 bis 100 Gew.-% C₅S₂$, 0 bis 90 Gew.-% (α, β) C₂S, 0 bis 30 Gew.-% C₄(AₓF₍₁₋ₓ₎)₃$ mit x im Bereich 0,1 bis 1, vorzugsweise von 0,8 bis 0,95, 0 bis 30 Gew.-% C₂(A_{y}F_{(1-y)}) mit y im Bereich von 0,2 bis 0,8 und vorzugsweise im Bereich von 0,4 bis 0,6, 0 bis 20 Gew.-% reaktive Aluminate, 0 bis 25 Gew.-% Periklas (M) und 0 bis 30 Gew.-% Nebenphasen bezogen auf die gesamte Menge an Klinker, wobei sich die Anteile der Phasen zu 100% addieren, verwendet wird.

5. Verfahren gemäß Anspruch 4, **dadurch gekennzeichnet, dass** mindestens eine röntgenamorphe Phase / eine Glasphase als Nebenphase im Bereich von 1 bis 10 Gew.-%, vorzugsweise 2 bis 8 Gew.-% und noch stärker bevorzugt 3 bis 5 Gew.-% vorliegt.

6. Verfahren gemäß einem der Ansprüche 1 bis 5, **dadurch gekennzeichnet, dass** Ternesit und Aluminiumkomponente vermischt und dem Bindemittel trocken oder als Lösung bzw. Suspension zugefügt werden.

7. Verfahren gemäß einem der Ansprüche 1 bis 5, **dadurch gekennzeichnet, dass** Ternesit und Aluminiumkomponente dem Bindemittel separat, jeweils trocken oder als Lösung/Suspension, zugefügt werden.

8. Verfahren gemäß einem der Ansprüche 1 bis 7, **dadurch gekennzeichnet, dass** das Bindemittel ausgewählt ist unter Portlandzement, Portlandkompositzement, Hochofenzement, Puzzolanzement, Multikomponenten/Komposit-Zement, Sulfathüttensandzement, Calciumaluminatzement, Calciumsulfoaluminatzement, Geopolymerzement, Hüttensand und kalkreichen Flugaschen.

9. Verfahren gemäß einem der Ansprüche 1 bis 8, **dadurch gekennzeichnet, dass** in dem Bindemittel die Summe von Ternesit und Aluminiumkomponente einen Anteil von 1 bis 20 Gew.-%, vorzugsweise von 2 bis 15 Gew.-% und besonders bevorzugt von 5 bis 10 Gew.-% ausmacht.

10. Verwendung eines Additivs umfassend Ternesit und eine nicht hydraulisch reaktive Aluminiumkomponente, ausgewählt aus gut wasserlöslichen Aluminiumverbindungen und solchen, die eine nur geringe Löslichkeit haben, wobei aber der Lösungsvorgang sehr rasch verläuft, so dass Aluminium in dem Maße, wie es umgesetzt wird, nachgeliefert wird, zur Beschleunigung der Erhärtung von hydraulischen oder latent-hydraulischen Bindemitteln.

11. Frühfestigkeitssteigerndes Additiv für hydraulische oder latent-hydraulische Bindemittel enthaltend eine nicht hydraulisch reaktive Aluminiumkomponente, ausgewählt aus gut wasserlöslichen Aluminiumverbindungen und solchen, die eine nur geringe Löslichkeit haben, wobei aber der Lösungsvorgang sehr rasch verläuft, so dass Aluminium in dem Maße, wie es umgesetzt wird, nachgeliefert wird, **dadurch gekennzeichnet, dass** es Ternesit enthält.

12. Additiv gemäß Anspruch 11, **dadurch gekennzeichnet, dass** der Anteil von Ternesit im Bereich von 10 bis 99 Gew.-%, bevorzugt 20 bis 95 Gew.-% und noch stärker bevorzugt 40 bis 90 Gew.-% liegt und der Anteil der Aluminiumkomponente im Bereich von 1 bis 90 Gew.-%, bevorzugt 5 bis 80 Gew.-% und noch stärker bevorzugt 10 bis 60 Gew.-% liegt.

13. Additiv gemäß Anspruch 11 oder 12, **dadurch gekennzeichnet, dass** weitere Abbinde- und / oder Erhärtungsbeschleuniger, vorzugsweise ausgewählt unter Lithiumsalzen und -hydroxiden, anderen Alkalisalzen und -hydroxiden, Alkalisilikaten, enthalten sind.

14. Additiv gemäß einem der Ansprüche 11 bis 13, **dadurch gekennzeichnet, dass** Betonverflüssiger und / oder Fließmittel, vorzugsweise auf Basis von Ligninsulfonaten, sulfoniertem Naphthalin-, Melamin- oder Phenolformaldehydkondensat, oder auf Basis von Acrylsäure- Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und Borate, Oxalate, Sulfanilsäure, Aminocarbonsäuren, Salicylsäure und Acetylsalicylsäure, Dialdehyde enthalten sind.

## Claims

1. A method for accelerating the hardening of hydraulic or latent hydraulic binders, **characterized in that** ternesite and a non-hydraulically reactive aluminum component, selected from readily water soluble aluminum compounds and such that have only a low solubility but a very rapid dissolution process, so that aluminum is delivered in addition in the amount in which it is reacted, are added to the binder.

2. The method according to claim 1, **characterized in that** the aluminum component is selected from soluble alkali aluminates, earth alkali aluminates, aluminum salts, aluminum hydroxides, aluminum oxide hydroxides, artificial pozzolans, natural pozzolans and combinations thereof.

3. The method according to claim 2, **characterized in that** Na₂Al₂O₄, K₂Al₂O₄, aluminum nitrate, aluminum carbonate, aluminum acetate, aluminum chloride, aluminum formate, aluminum sulfate, amorphous/reactive aluminum hydroxide and/or aluminum oxide hydroxide and/or metakaolin is used as the aluminum component.

4. The method according to any one of claims 1 to 3, **characterized in that** a ternesite clinker containing 10 to 100 % by weight C₅S₂$, 0 to 90 % by weight (α, β) C₂S, 0 to 30 % by weight C₄(AₓF₍₁₋ₓ₎)₃$ with x ranging from 0.1 to 1, preferably from 0.8 to 0.95, 0 to 30 % by weight C₂(A_{y}F_{(1-y)}) with y ranging from 0.2 to 0.8 and preferably ranging from 0.4 to 0.6, 0 to 20 % by weight reactive aluminates, 0 to 25 % by weight periclase (M) and 0 to 30 % by weight secondary phases, referred to the total quantity of clinker, is used as the ternesite, wherein the portions of the phases add up to 100%.

5. The method according to claim 4, **characterized in that** at least one X ray amorphous phase / glass phase is present as a secondary phase, in a range from 1 to 10 % by weight, preferably 2 to 8 % by weight and more preferred 3 to 5 % by weight.

6. The method according to any one of claims 1 to 5, **characterized in that** ternesite and aluminum component are mixed and added to the binder dry or as a solution or suspension.

7. The method according to any one of claims 1 to 5, **characterized in that** ternesite and aluminum component are added to the binder separately, each dry or as a solution/suspension.

8. The method according to any one of claims 1 to 7, **characterized in that** the binder is selected from among portland cement, portland composite cement, blast furnace cement, pozzolan cement, multicomponent/composite cement, super sulphated cement, calcium aluminate cement, calcium sulfoaluminate cement, geopolymer cement, ground granulated blast furnace slag and lime-rich fly ash.

9. The method according to any one of claims 1 to 8, **characterized in that** in the binder, the total of ternesite and aluminum component constitutes a portion of 1 to 20 % by weight, preferably 2 to 15 % by weight and particularly preferred 5 to 10 % by weight.

10. The use of an additive comprising ternesite and a non-hydraulically reactive aluminum component, selected from readily water soluble aluminum compounds and such that have only a low solubility but a very rapid dissolution process, so that aluminum is delivered in addition in the amount in which it is reacted, for accelerating the hardening of hydraulic or latent hydraulic binders.

11. An early strength increasing additive for hydraulic or latent hydraulic binders containing a non-hydraulically reactive aluminum component, selected from readily water soluble aluminum compounds and such that have only a low solubility but a very rapid dissolution process, so that aluminum is delivered in addition in the amount in which it is reacted, **characterized in that** it contains ternesite.

12. The additive according to claim 11, **characterized in that** the portion of ternesite ranges from 10 to 99 % by weight, preferably 20 to 95 % by weight and more preferred 40 to 90 % by weight, and the portion of the aluminum component ranges from 1 to 90 % by weight, preferably 5 to 80 % by weight and more preferred 10 to 60 % by weight.

13. The additive according to claim 11 or 12, **characterized in that** it contains additional setting and / or hardening accelerators, preferably selected from lithium salts and lithium hydroxides, other alkali salts and alkali hydroxides, and alkali silicates.

14. The additive according to any one of claims 11 to 13, **characterized in that** it contains concrete plastizisers and/or water reducing admixtures, preferably based on lignin sulfonates, sulfonated naphthalene, melamine, or phenolformaldehyde condensate, or based on acrylic acid acrylamide mixtures or polycarboxylate ethers, or based on phosphated polycondensates, phosphated alkylcarboxylic acids and salts thereof, (hydroxy)carboxylic acids and carboxylates, borax, boric acid and borates, oxalates, sulfanilic acid, aminocarboxylic acids, salicylic acid and acetylsalicylic acid, and dialdehydes.

## Revendications

1. Procédé pour accélérer le durcissement de liants hydrauliques ou latents-hydrauliques, **caractérisé en ce qu'**on ajoute, au liant, de la ternésite et un composant à base d'aluminium non hydrauliquement réactif, choisi parmi les composés d'aluminium bien solubles dans l'eau et ceux qui ne présentent qu'une faible solubilité, le processus de dissolution se déroulant cependant très rapidement, de telle sorte que l'aluminium continue à être fourni au fur et à mesure de sa transformation.

2. Procédé selon la revendication 1, **caractérisé en ce que** le composant à base d'aluminium est choisi parmi les aluminates solubles de métal alcalin et de métal alcalino-terreux, les sels d'aluminium solubles, les hydroxydes d'aluminium solubles, les oxydes-hydroxydes d'aluminium solubles, les pouzzolanes synthétiques solubles, les pouzzolanes naturelles solubles et leurs combinaisons.

3. Procédé selon la revendication 2, **caractérisé en ce qu'**on utilise, comme composant d'aluminium, Na₂Al₂O₄, K₂Al₂O₄, le nitrate, le carbonate, l'acétate, le chlorure, le formiate, le sulfate d'aluminium, l'hydroxyde d'aluminium amorphe/réactif et/ou l'oxyde-hydroxyde d'aluminium et/ou le métakaolin.

4. Procédé selon l'une quelconque des revendications 1 à 3, **caractérisé en ce qu'**on utilise, comme ternésite, un clinker de ternésite contenant 10 à 100% en poids de C₅S₂$, 0 à 90% en poids de (α, β)C₂S, 0 à 30% en poids de C₄(AₓF₍₁₋ₓ₎₃$ où x se situe dans la plage de 0,1 à 1, de préférence de 0,8 à 0,95, 0 à 30% en poids de C₂(A_{y}F_{(1-y)}) où y se situe dans la plage de 0,2 à 0,8 et de préférence dans la plage de 0,4 à 0,6, 0 à 20% en poids d'aluminates réactifs, 0 à 25% en poids de périclase (M) et 0 à 30% en poids de phases secondaires par rapport à la quantité totale de clinker, les proportions des phases s'ajoutant à 100%.

5. Procédé selon la revendication 4, **caractérisé en ce qu'**au moins une phase amorphe aux rayons X/phase vitreuse est présente, comme phase secondaire, dans la plage de 1 à 10% en poids, de préférence de 2 à 8% en poids et encore plus préférablement de 3 à 5% en poids.

6. Procédé selon l'une quelconque des revendications 1 à 5, **caractérisé en ce que** la ternésite et le composant d'aluminium sont mélangés et ajoutés au liant sous forme sèche ou sous forme de solution resp. de suspension.

7. Procédé selon l'une quelconque des revendications 1 à 5, **caractérisé en ce que** la ternésite et le composant d'aluminium sont ajoutés séparément au liant, à chaque fois sous forme sèche ou sous forme de solution/suspension.

8. Procédé selon l'une quelconque des revendications 1 à 7, **caractérisé en ce que** le liant est choisi parmi le ciment Portland, le ciment composite de Portland, le ciment de haut-fourneau, le ciment de pouzzolane, le ciment multicomposant/composite, le ciment sursulfaté, le ciment d'aluminate de calcium, le ciment de sulfoaluminate de calcium, le ciment géopolymère, le laitier granulé et les cendres volantes riches en chaux.

9. Procédé selon l'une quelconque des revendications 1 à 8, **caractérisé en ce que** dans le liant, la somme de ternésite et de composants d'aluminium représente une proportion de 1 à 20% en poids, de préférence de 2 à 15% en poids et de manière particulièrement préférée de 5 à 10% en poids.

10. Utilisation d'un additif comprenant de la ternésite et un composant à base d'aluminium non hydrauliquement réactif, choisi parmi les composés d'aluminium bien solubles dans l'eau et ceux qui ne présentent qu'une faible solubilité, le processus de dissolution se déroulant cependant très rapidement, de telle sorte que l'aluminium continue à être fourni au fur et à mesure de sa transformation pour accélérer le durcissement de liants hydrauliques ou latents-hydrauliques.

11. Additif augmentant la résistance à court terme pour des liants hydrauliques ou latents-hydrauliques, contenant un composant à base d'aluminium non hydrauliquement réactif, choisi parmi les composés d'aluminium bien solubles dans l'eau et ceux qui ne présentent qu'une faible solubilité, le processus de dissolution se déroulant cependant très rapidement, de telle sorte que l'aluminium continue à être fourni au fur et à mesure de sa transformation, **caractérisé en ce qu'**il contient de la ternésite.

12. Additif selon la revendication 11, **caractérisé en ce que** la proportion de ternésite se situe dans la plage de 10 à 99% en poids, de préférence de 20 à 95% en poids et encore plus préférablement dans la plage de 40 à 90% en poids et la proportion du composant d'aluminium se situe dans la plage de 1 à 90% en poids, de préférence de 5 à 80% en poids et encore plus préférablement de 10 à 60 % en poids.

13. Additif selon la revendication 11 ou 12, **caractérisé en ce que** d'autres accélérateurs de prise et/ou du durcissement, de préférence choisis parmi les sels et les hydroxydes de lithium, d'autres sels et hydroxydes de métal alcalin, les silicates de métal alcalin, sont contenus.

14. Additif selon l'une quelconque des revendications 11 à 13, **caractérisé en ce que** des liquéfiants pour béton et/ou des fluidifiants, de préférence à base de sulfonates de lignine, d'un produit de condensation sulfoné de naphtalène-formaldéhyde, de mélamine-formaldéhyde ou de phénol-formaldéhyde ou à base de mélanges d'acide acrylique-acrylamide ou de polycarboxylate-éthers ou à base de produits de polycondensation phosphatés, d'acides alkylcarboxyliques phosphatés et de leurs sels, d'acides (hydroxy)-carboxyliques et de carboxylates, de borax, d'acide borique et de borates, d'oxalates, d'acide sulfanilique, d'acides aminocarboxyliques, d'acide salicylique et d'acide acétylsalicylique, de dialdéhydes sont contenus.
